# EUROPEAN PATENT APPLICATION

(11) **EP 4 007 008 A1**
(43) Date of publication of application: **01.06.2022**
(21) Application number: 20846261.4
(22) Date of filing: 30.07.2020
(51) Int. Cl.: H01M 4/04, H01G 11/30, H01G 11/86, H01M 4/13, H01M 4/139, H01M 4/62

(54) **PRODUCTION METHOD FOR ELECTRODE FOR POWER STORAGE DEVICE, AND ELECTRODE FOR POWER STORAGE DEVICE**

(30) Priority: 31.07.2019 JP 2019141480
(71) Applicant: Shenzhen I&T Micro Aluminium Technology Co., Ltd., Shenzhen, 518027 (CN)
(72) Inventor: HASUO, Shunji, Yanagawa city, Fukuoka 832-0088 (JP)
(74) Representative: Glawe, Delfs, Moll
(86) International application number: PCT/IB2020/057183
(87) International publication number: WO 2021/019480

(57) **Abstract**

Disclosed is a manufacturing method for an electrode of an electricity storage device. The manufacturing method includes: a working procedure of acquiring a long metal fiber by cutting an end surface of a metal foil coil; a working procedure of cutting the long metal fiber so that the average length is less than 5 mm in a state of pressing a bundle of the acquired long metal fibers or in a state of configuring the bundle of the long metal fibers in a cylinder; a working procedure of mixing a metal short fiber obtained from this with a positive electrode material or a negative electrode material constituting a positive electrode or a negative electrode of a lithium battery, to prepare slurry; a working procedure of coating a foil with the slurry; and a working procedure of forming a positive or negative electrode containing the short fibers through a working procedure of drying it to form a predetermined shape.

## Description

### Technical Field

The present invention relates to a manufacturing method for an electrode of an electricity storage device and an electrode of an electricity storage device.

### Background

In order to save energy and prevent global warming, capacitors and secondary batteries are used in various fields, especially in an automobile industry, through the use of electric energy, the development for further improving these performances is accelerated.

An electric double-layer capacitor is used in the past as a standby of a memory for an electronic circuit to which a low voltage is applied, and it has the higher input-output reliability compared with the secondary battery.

Therefore, in recent years, it is used for power generation using natural energy sources such as sunlight and wind, as well as power sources for regeneration of construction machinery, and instantaneous low voltage, and a tram and the like. Although its use in automobiles is also researched, it is not used in this field until recent years due to the characteristics and cost that do not meet the requirements. However, at present, the electric double-layer capacitor is used in an electronically controlled braking system, and is researched for a standby power source of an electrical mounting component of the automobile and start-up energy supply, brake control, power assist and the like of an idling stop system.

The structure of the electric double-layer capacitor is composed of positive and negative electrode portions, electrolyte, and a diaphragm that prevents the opposing positive and negative electrode portions from short-circuiting. The electrode portion is formed by the following modes: coating an aluminum foil (the thickness is about 20 µm) as a current collector with a plurality of layers of a material formed by mixing a polarizable electrode (it is mainly activated carbon now), a binder for maintaining the activated carbon, and a conductive aid (it is mainly carbon particles). Such an electric double-layer capacitor is disclosed in Patent Document 1, for example.

The charging of the electric double-layer capacitor is performed by the movement of electrolyte ions in solution and the adsorption and desorption on the microporous surface of the activated carbon. An electric double-layer is formed on the contact interface between the activated carbon powder and the electrolyte.

In addition, the particle size of general activated carbon is, for example, about 4-8 µm, and the specific surface area is, for example, 1600-2500 m³/g. The electrolyte has a positive ion, a negative ion, and a solvent. A tetraethylammonium salt is used as the positive ion, a tetrafluoroborate ion and the like are used as the negative ion, and propylene carbonate, ethylene carbonate and the like are used as the solvent.

On the other hand, a lithium ion secondary battery is mainly composed of a positive electrode, a negative electrode, and a diaphragm. Generally speaking, the positive electrode is formed by coating an aluminum foil with a thickness of about 20 µm as the current collector with active substance powder with a thickness of about 100 µm, the active substance powder is usually formed by mixing a lithium cobalt oxide, a conductive aid as an additive, and a binder, and the negative electrode is formed by coating a copper foil as the current collector with a carbon material. For example, the positive electrode and the negative electrode are separated by the diaphragm such as a polyethylene, and immersed in the electrolyte, thus a lithium ion battery is constituted. Such a lithium ion battery is disclosed in Patent Document 2, for example.

Charging-discharging is performed by the movement of lithium ions between the positive electrode and the negative electrode, and the lithium ions are moved from the positive electrode to the negative electrode during charging. If the lithium ions of the positive electrode disappear or the lithium ions may no longer be inserted into the negative electrode, the charging ends. It is on the contrary during discharging.

On the other hand, LiB (lithium ion battery) is a mostly used battery in recent years. However, since an electrolyte salt (usually LiPF₆) contained in an electrolyte solvent is flammable liquid, thus there are dangers of fire and liquid leakage. In addition, the organic electrolyte causes decomposition of negative ions and various foreign molecules at the interface with the positive electrode, in other words, the life of LiB is shortened. Therefore, it is attempted that the electrolyte is replaced with a solid electrolyte. Such a battery is called an all-solid-state battery because a positive electrode layer, a negative electrode layer, and an electrolyte layer are all composed of solids. The all-solid battery is originally not limited to a constitutive substance of LiB, but since there are many researches on solidification of the electrolyte of LiB, they generally refer to all-solid-state LiB.

The advantages of the all-solid-state battery are, for example, as follows: because the electrolyte layer is flame-retardant, it is safe; because only the lithium ions are moved in the electrolyte layer, it is not easy to perform side reactions with the negative ions or the solvent molecules, and it has the longer life; and because the electrolyte layer is not liquid, it has a wide using temperature range and the like.

In addition, while LiB is wanted to be used to obtain a high-capacity high-voltage battery, a plurality of individual battery cells must be controlled, but if a solid electrolyte layer is used, it only needs to overlap according to a sequence of the positive electrode layer, the solid electrolyte layer, and the negative electrode layer, so it also has the advantage of being able to manufacture a battery with a high energy density.

The performances of the above-mentioned device are all achieved by the exchange of ions and electrons. Therefore, the electrical capacity, the charging-discharging speed, the life and the like of the device depend on how the electronic exchange may be performed smoothly, or whether it may continue to perform.

On the other hand, the charging-discharging of the all-solid-state battery in which the electrolyte of the lithium ion battery is solidified is performed by intercalation and deintercalation of Li.

For example, in Patent Document 3, a conductive elastomer is arranged between monocells to suppress expansion and contraction. In Patent Document 4, a buffer layer is arranged around a battery. In Patent Document 5, various designs, such as porosity control, are performed.

In addition, an electrode using a current collector made of a metal fiber is also known. For example, Patent Documents 6 and 7 may be listed.
Patent Document 1: Japanese Patent Application Laid-Open Publication No. 2005-086113
Patent Document 2: Japanese Patent Application Laid-Open Publication No. 2007-123156
Patent Document 3: Japanese Patent Application Laid-Open Publication No. 2008-311173
Patent Document 4: Japanese Patent Application Laid-Open Publication No. 2015-111532
Patent Document 5: Japanese Patent No. 5910737
Patent Document 6: Japanese Patent No. 6209706
Patent Document 7: Japanese Patent Application Laid-Open Publication No. 2018-106846

### Summary

(Subject of electric double-layer capacitor)

Different points between the electric double-layer capacitor and a secondary battery, mainly a lithium ion secondary battery, are that it does not involve a chemical reaction, and has a short storage time, and a quick discharging time of a current. In addition, with regard to the energy density, the lithium battery is hundreds of Wh/L, while the electric double-layer capacitor is tens of Wh/L, and the electric double-layer capacitor is one digit lower than the lithium battery. Due to the above differences, the use of the electric double-layer capacitor in a standby power source of an electrical mounting component and start-up energy supply, brake control, power assist and the like of an idling stop system is researched instead of power storage.

In recent years, the electric double-layer capacitor is used in the development of large-capacity power devices such as an electric automobile and an energy generator. However, in order to efficiently transfer large-capacity energy in and out of the capacitor, there is a subject that it is necessary to increase the electrostatic capacitance and reduce the internal resistance of an electrode portion.

### (Subject of lithium ion battery)

On the other hand, the secondary battery, mainly the lithium battery, may be used for a long time since the energy density is relatively high, so it is used in various fields such as a portable device. In recent years, it is used in automobiles, heavy machinery, and energy fields and the like. In order to increase the capacity, it is required to be enlarged. However, in the enlargement, there are many subjects such as the charging speed, the life, the reliability and the manufacture difficulty, and the subject of capacity is taken as the major. For example, the capacity of the battery used in a mobile phone is about 15 Wh, but the capacity of the battery used in a hybrid vehicle is tens of k to hundreds of kWh, the difference between the two is thousands of times, and there are the above subjects associated with this.

The reaction of the lithium ion secondary battery is a reversible chemical reaction. While the electrode is charged and discharged, an active substance expands and contracts. Therefore, the active substance is peeled from a current collector, and the charging-discharging characteristics are deteriorated. Namely, 100% of the same charging-discharging is not always performed, and it may cause a decrease in the charging-discharging capability. The battery may be used in a hybrid vehicle and an electric vehicle for many years. Therefore, in order to prevent the above deterioration, it is necessary to suppress the separation of the current collector and the active substance.

In addition, one of the biggest subjects of the lithium ion battery is the internal resistance. The so-called internal resistance may be said to be a resistance while lithium ions are moved in electrolyte in positive and negative electrodes inside the battery. This movement resistance is a main reason that the capacity may not be increased or the charging-discharging speed may not be accelerated.

Regarding the enlargement, namely the capacity is increased, if the current collector is coated with the more active substance, the capacity is increased, but the movement resistance of the lithium ions may also be increased. Therefore, the thickness of an active substance layer is limited, and while the active substance layer is thickened, the charging-discharging speed is slowed due to the movement resistance. If the coating thickness is thinned, the internal resistance is decreased and the charging-discharging speed is increased, but the capacity is reduced. Therefore, by overlapping the active substance-coated current collector for many times, the area of the active substance-coated current collector is enlarged and the like, thereby the capacity is increased.

The speed of charging-discharging is also related to the amount of the lithium ions generated. If a large amount of the ions may be generated at a time and moved at a time, the charging speed and the discharging speed are increased. Since the chemical reaction of the secondary battery occurs at the interface between the electrolyte and the active substance, if the contact area between the electrode and the electrolyte may be increased, the charging-discharging speed may also be improved.

In order to reduce the internal resistance, designs, such as the improvement of an additive, the improvement of conductive aid and active substance, and the pre-coating of carbon particles on the current collector, are implemented at present. In addition, with regard to the shape of the current collector, as described above, the improvement that it is made into a thin film as much as possible, or the improvement that a small hole is formed on a foil to increase the surface area is also performed. In the electric double-layer capacitor, researches and developments, such as the improvement of activated carbon and additive, and the increase of the contact area between the current collector and the active substance layer, are also performed.

### (Subject of all-solid-state battery)

On the other hand, the charging-discharging of the all-solid-state battery formed by solidifying the electrolyte of the lithium ion battery is performed by intercalation and deintercalation of Li. At this time, a crystal lattice as a main body repeatedly expands and contracts. While the volume change caused by this is larger, the contact between particles of the active substance, the solid electrolyte, and the conductive aid is cut off, and the amount of the effective active substance is reduced. In the all-solid-state battery, even if it is repeatedly charged and discharged with a current of about 1/10 to 2/10 of the battery capacity, there may also be close to 1 mole of Li intercalation and deintercalation, and the volume expansion and contraction rate thereof reaches 10% nearly. Therefore, various designs to suppress the expansion and contraction thereof are proposed.

As described above, in order to solve the subject of the high capacity in the electricity storage device, if the internal resistance may be reduced and the active substance may be prevented from being peeled from the current collector due to the expansion and contraction, it is possible to significantly improve.

A manufacturing method for an electrode of an electricity storage device according to a first aspect of the present invention includes: a fiber manufacturing working procedure, acquiring a long metal fiber by cutting an end surface of a coil with a cutting tool, herein the coil is formed by winding a metal foil; a cutting working procedure, cutting the long metal fiber so that the average length is less than 5 mm in a state of pressing a bundle of the long metal fibers on a predetermined surface by using a pressing component, or in a state of configuring the bundle of the long metal fibers in a plastic tube; a slurry preparation working procedure, preparing liquid-like or gel-like slurry, herein the slurry contains a binder, a metal short fiber manufactured by the cutting working procedure, and adsorbent powder that adsorbs electrolyte ions during charging or active substance powder that performs a chemical reaction during charging-discharging; a forming working procedure, forming the slurry into a predetermined shape; and a drying working procedure, drying the slurry formed into the predetermined shape, to form an electrode containing the short fibers.

In the first aspect of the present invention, the short fiber used for the electrode of the electricity storage device is manufactured as described above. Sometimes, the long fiber and the short fiber are manufactured by an aluminum molten metal blowing method, or a short fiber manufacturing method which is called as a flutter processing method is used to cut a metal rod while a tool is used to flutter, thereby the short fiber is manufactured.

However, through these methods, it is difficult to stably manufacture the short fiber with a diameter of several tens of µm and a length of several mm. In addition, the short fiber with the unstable shape may affect the battery performance. After the more stable manufacture of such short fibers is researched, a method that the long fiber manufactured by a coil cutting method may be cut into any sizes is found.

The coil cutting method is a method of cutting a metal foil wound into a coil shape from a direction of an end surface thereof to manufacture a long fiber with a neat shape. Therefore, the cross section of the fiber has a shape, such as a square, a rectangle, or a trapezoid, having the thickness and cutting depth of the foil, and the shape is neat. In this way, the short fiber with the neat cross-sectional shape and length may achieve the improvement of the battery performance.

As long as it is a metal capable of forming the foil, this method may be applied to any types of metals.

A second aspect of the present invention is an electrode of an electricity storage device, it includes a metal short fiber of which the average length is less than 5 mm, and adsorbent powder that adsorbs electrolyte ions during charging or active substance powder that performs a chemical reaction during charging-discharging, herein the weight ratio of the short fibers is less than 8% by weight.

A third aspect of the present invention is an electrode of an electricity storage device, it includes a metal short fiber, and adsorbent powder that adsorbs electrolyte ions during charging or active substance powder that performs a chemical reaction during charging-discharging, herein the short fiber has a small diameter portion and a large diameter portion of which the diameter is more than 1.5 times greater than that of the small diameter portion, and the length of the large diameter portion is 5 times less than the average diameter of the small diameter portion.

According to the present invention, the improvement of the battery performance may be achieved.

### Brief Description of the Drawings

Fig. 1 is a cross-sectional schematic diagram of an electrode involved according to an embodiment of the present invention.
Fig. 2 is a cross-sectional schematic diagram of another electrode of this embodiment.
Fig. 3 is a schematic diagram showing a preparation method for slurry of this embodiment.
Fig. 4 is a schematic diagram showing a coating method of the slurry used to manufacture the electrode of this embodiment.
Fig. 5 is a schematic diagram showing a rolling method for manufacturing the electrode of this embodiment.
Fig. 6 is a cross-sectional schematic diagram of an all-solid-state battery using the electrode of this embodiment.
Fig. 7 is a schematic diagram showing a pressurizing method for manufacturing the electrode of this embodiment.
Fig. 8 is a graph showing the characteristics of a lithium ion battery using the electrode of this embodiment.
Fig. 9 is a graph showing the cycle characteristics of the lithium ion battery using the electrode of this embodiment.
Fig. 10 is a graph showing the characteristics of the lithium ion battery using the electrode of this embodiment.
Fig. 11 is a schematic diagram showing a manufacturing method for a short fiber of an electrode according to a modification example of this embodiment.
Fig. 12 is a schematic diagram of the short fiber of the electrode according to a modification example of this embodiment.

### Detailed Description of the Embodiments

An electrode and an electricity storage device involved according to an embodiment of the present invention are described below with reference to the drawings. It should be noted that a lithium ion battery is mainly used as the electricity storage device for the description.

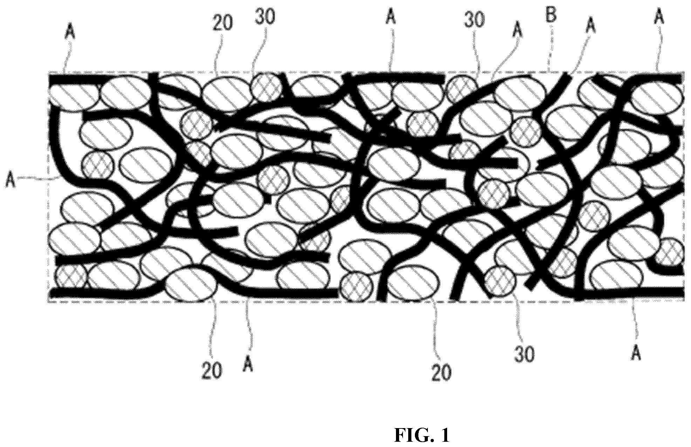

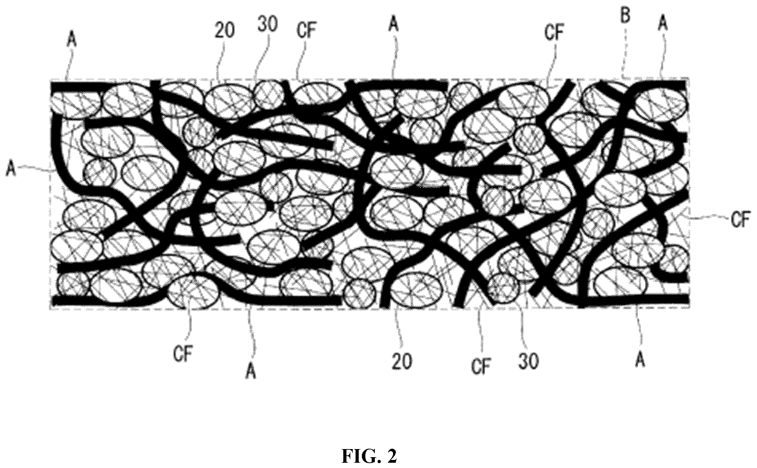

Fig. 1 and Fig. 2 show an electrode (positive electrode or negative electrode) mixed with a short fiber A of aluminum or copper with an average wire diameter of 50 µm or less.

It should be noted that Fig. 1 and Fig. 2 are diagrams for easy understanding of the structure of this embodiment. The size, thickness, length, and mixing ratio and the like of the short fiber A, active substance powder 20, a conductive aid 30, a carbon fiber CF and the like are different from the reality.

As shown in Fig. 1 and Fig. 2, the electrode is provided with the short fiber A of aluminum or copper with the average wire diameter of 50 µm or less and the active substance powder 20 that is maintained together with the short fiber A by a binder B so as to perform a chemical reaction during charging-discharging. According to the needs, the electrode is further provided with the conductive aid 30 maintained by a binder B.

### [Forming of metal short fiber used as current collector]

For example, a pair of plastic films with a thickness of 0.1 mm to 0.3 mm is used to sandwich a bundle of metal long fibers (a long fiber of aluminum or copper) manufactured by a coil cutting method, and the bundle of the long fibers is cut into an arbitrary length. Namely, the long fiber is cut in a state that the bundle of the long fibers is pressed on a predetermined surface using a pressing component made of plastic and the like. The predetermined surface is an upper surface of a plastic film in this embodiment, but it may be an upper surface of a workbench made of plastic, metal and the like. The thickness of the plastic film may be 1 mm or less. Alternatively, in a state that the bundle of the long fiber is configured in a cylindrical plastic tube, the bundle of the long fiber is cut into an arbitrary length. The wall thickness of the plastic tube may be 0.1 to 0.3 mm, for example, and may be 0.5 mm or less. Namely, in a state that the bundle of the long fibers is configured in a tubular component made of plastic and the like, the bundle of the long fibers is cut. The bundle of the long fibers may be cut together with the pressing component or the tubular component. Thus, it is possible to cut the bundle of the long fibers stably and efficiently. In addition, preferably the bundle of the long fibers is relatively densely configured in the tubular component. Thus, the short fiber A with the arbitrary length is manufactured.

It should be noted that the average length of the short fiber A cut into the arbitrary length is 5 mm or less, and preferably the average length is 2 mm or less. In addition, the average wire diameter of the short fiber A is 50 µm or less, preferably 25 µm or less, and more preferably 20 µm or less.

In the coil cutting method, an aluminum or copper foil is wound into a coil shape, and an end surface of the coil is cut with a cutting tool, as to obtain a long metal fibers (metal long fiber). Then, the short fiber A is obtained by cutting the long metal fiber into the above lengths.

It should be noted that the metal fiber, the short fiber A, and the foil of this embodiment may also be comprised of other metals, such as steel, stainless steel, and brass.

### [Forming of Electrode]

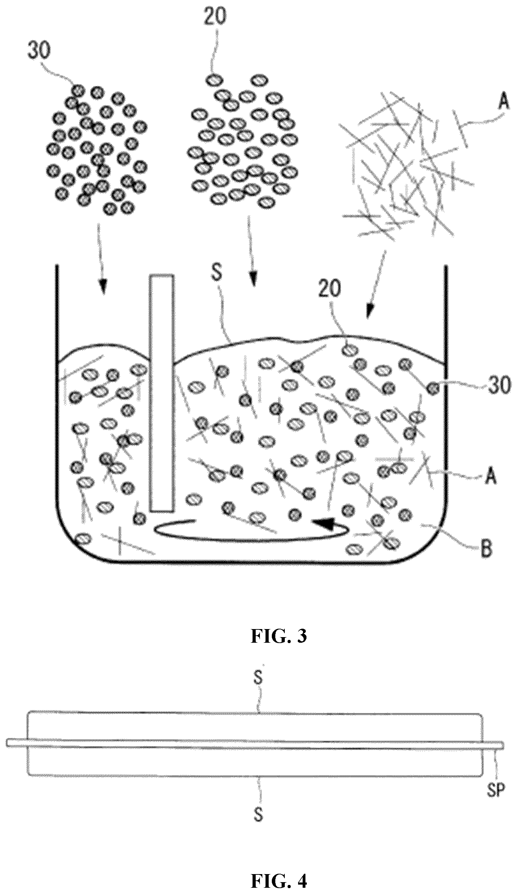

While the electrode shown in Fig. 1 is manufactured, as shown in Fig. 3, liquid-like or gel-like slurry S containing the short fiber A of aluminum or copper, the active substance powder 20, the conductive aid 30, and the binder B is prepared. In order to prepare this slurry S, the short fiber A of aluminum or copper, the active substance powder 20, the conductive aid 30, and the diluted binder B are mixed by using a mixing machine and the like. The weight ratios of the active substance powder 20, the conductive aid 30, and the binder B during drying may be about these weight ratios in the commercially available secondary battery. Hereinafter, the weight ratio or the mixing ratio refers to the weight ratio or the mixing ratio relative to the entire electrode dried by the drying working procedure described later. In this embodiment, the mixing ratio of the binder B is 2% by weight or more and less than 6% by weight, preferably about 4% by weight. The mixing ratio of the short fiber A is preferably 1% by weight or more and less than 8% by weight. If there are few short fibers A, the effect as the current collector is small, and if there are many short fibers A, the internal resistance is increased on the contrary. The mixing ratio of the short fiber A is preferably 2.5% by weight or more and 5.5% by weight or less. It should be noted that it may be considered that the mixing ratio of the short fiber A is most preferably 3.5% by weight or more and 5% by weight or less. While the electrode shown in Fig. 2 is manufactured, a carbon fiber CF is further added on the basis of the above to prepare the slurry S. While the carbon nanofiber CF is added, the mixing ratio thereof is preferably 1% by weight or more and less than 2% by weight. If there are few carbon nanofibers CF, the effect is not seen, and if there are many carbon nanofibers CF, the deterioration is caused in a cycle test.

The average length of the short fiber A of aluminum or copper is 5 mm or less. Therefore, in the slurry S, the short fiber A of aluminum or copper is easily mixed with other complexes. While the average length of the short fiber A is 2 mm or less, there is a tendency to be more easily mixed. If it is too short, the mutual contact between the fibers is less. Therefore, the average length of the short fiber A is preferably 1 mm or more. In addition, if the short fiber A is longer, the fibers are entangled with each other, and a fiber lump remains in the slurry S. Therefore, the average length of the short fiber A is preferably 1 mm or more and 4 mm or less.

Next, the slurry S is coated on a current collector foil (aluminum foil or copper foil) with a predetermined thickness, and pre-drying is performed in order to increase the viscosity. While the current collector foil is not used, the slurry S may be coated on a diaphragm. For example, as shown in Fig. 4, the slurry S serving as the positive electrode is coated on one surface in a thickness direction of the diaphragm SP, and the slurry S serving as the negative electrode is coated on the other surface in the thickness direction of the diaphragm SP. It is also possible to coat the slurry S serving as the positive electrode or the negative electrode on only one surface of the diaphragm SP. The pre-drying dries the binder B to an incompletely solidified state, thereby the electrode foil is easily formed into a predetermined shape. It should be noted that in this embodiment, a portion of the electrode serving as the positive electrode or the negative electrode which is integrated with the current collector foil or the diaphragm SP is called as an electrode foil sometimes.

In addition, instead of coating the current collector foil or the diaphragm SP, the slurry S of the positive electrode or the negative electrode may be formed into a sheet shape on a predetermined mold. In this case, the electrode that is the positive electrode or the negative electrode formed into the sheet shape is called as the electrode foil.

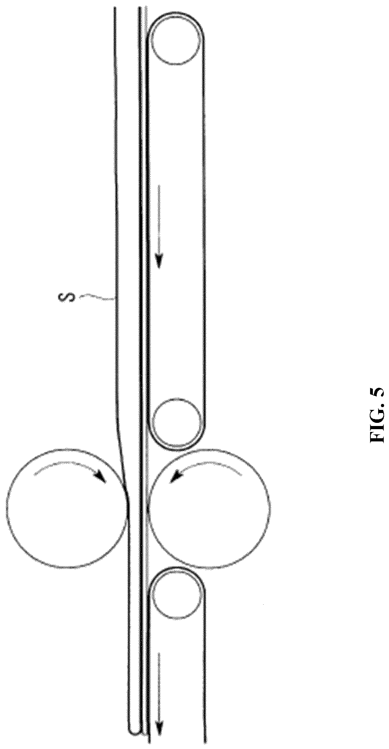

Next, the coated and dried electrode foil is pressed and pressurized. Thereby, the slurry S is formed into a predetermined thickness and the like corresponding to the size of the electrode. It should be noted that, as shown in Fig. 5, the electrode foil is pressurized by passing between a pair of rollers, thereby it is formed into the predetermined thickness.

Next, the drying working procedure of drying the formed electrode foil by vacuum drying and the like is performed. In this way, the removal of moisture in the electrode and the solidification of the binder B are performed.

Preferably the short fiber A of aluminum or copper with a purity of 99% or more is used, and more preferably the short fiber A of aluminum or copper with a purity of 99.9% or more is used. At this time, through the pressurization in Fig. 5, in a portion in which the short fibers A contact with each other, two intersected short fibers A are easily deformed by mutually biting.

Namely, in the contact portion, the short fiber A becomes flat, and thus the two intersected short fibers A bite into each other. By pressurizing, the short fibers A are brought into close contact through the active substance powder 20, so that the resistance of the contact portion between the short fibers A is reduced.

Namely, it is possible to reduce the movement resistance of electrons in the contact portion between the short fibers A, and it is beneficial to reduce the movement resistance of the electrons to input and output terminals.

It should be noted that through the working procedure of forming the slurry S into the electrode foil, and the working procedure of pressing and pressurizing the formed electrode foil and the like, the short fiber A contacting the active substance powder 20 is bent along the active substance powder 20, and the short fiber A is wound around the active substance powder 20.

### [Active substance powder of positive electrode]

As the active substance powder 20 of the positive electrode, it may be any substances as long as it may be maintained on the current collector 10 by the binder B and the like or it may be maintained on the binder B solidified together with the current collector 10, and preferably it is a substance with good cycle characteristics. As an example of the active substance, a lithium cobaltate (LiCoO₂), an iron phosphate-based active substance, and carbon materials such as graphite may be listed. It should be noted that a well-known active substance used for the positive electrode and negative electrode of the secondary battery may be used.

As an example, the average particle diameter of the active substance powder 20 is a value obtained by adding 10 µm to the average wire diameter of the short fiber A functioning as the current collector. For example, while the average wire diameter of the short fiber A is 20 µm, the average particle diameter of the active substance powder 20 is preferably 30 µm or less or about 30 µm. Thus, the contact area between the short fiber A functioning as the current collector and the active substance powder 20 is increased, and it helpful to improve the charging-discharging speed.

### [Binder]

As the binder B, a thermoplastic resin, a polysaccharide polymer material and the like may be used. An example of a material of the binder B is a polyacrylic resin, polytetrafluoroethylene (PTFE), polyvinylidene fluoride (PVdF), a copolymer of vinylidene fluoride (VdF) and hexafluoropropylene (HFP) and the like. It should be noted that a well-known binder used for the electrode of the secondary battery and the electric double-layer capacitor may be used.

### [Conductive aid]

As the conductive aid 30, it may be any materials as long as it has the conductivity, and preferably it is a material that does not produce a chemical change due to the electrolyte or solvent. As an example of the conductive aid 30, graphite and carbon black may be listed. It should be noted that a well-known conductive aid used for the electrode of the secondary battery and the electric double-layer capacitor may be used.

### [Active substance powder of negative electrode]

As the active substance powder 20 of the negative electrode, artificial graphite, natural graphite and the like are used. While they are used in the negative electrode, since a working potential on the negative electrode side is low, a Li-A1 reaction occurs while the short fiber A of aluminum is used. This causes a decrease in Li and the rapid deterioration of the battery. Therefore, the short fiber A of aluminum may not be used, and the short fiber A of copper needs to be used. On the other hand, LTO (lithium titanate), which is developed in recent years and has a higher reaction potential than the Li-A1 reaction, may be used as the active substance powder 20 of the negative electrode. In this case, the short fiber A of aluminum may be used for the negative electrode. It may be seen that if the short fiber A of aluminum is 1% by weight or more and less than 8% by weight (preferably 3.5% by weight or more and 5% by weight or less), and LTO is used as the active substance powder 20 of the negative electrode, the internal resistance may be greatly reduced.

### [Applications of other devices]

The above manufacturing method for the electrode and the electrode may be applied to the electrode of the electricity storage device such as the electric double-layer capacitor, the secondary battery including the all-solid-state battery, and a hybrid capacitor including a lithium ion capacitor. For example, while the positive electrode and negative electrode of the capacitor such as the electric double-layer capacitor is manufactured, it may be manufactured by the working procedure of mixing the activated carbon functioning as the active substance powder 20, the conductive aid 30, and the diluted binder B with the short fiber A together. It is also possible to use well-known active substance powder used in the capacitor such as the electric double-layer capacitor instead of the activated carbon. While the all-solid-state battery is manufactured, it may be manufactured through the working procedure of mixing the solid electrolyte with the active substance powder 20, the conductive aid 30, the diluted binder B, and the short fiber A together.

It should be noted that while the electrode shown in Fig. 2 is manufactured, as the slurry S, in addition to the active substance powder 20, the conductive aid 30 and the binder B, it is also possible to use the slurry S containing the carbon fiber CF with an average thickness of 0.5 µm or less, preferably 0.3 µm or less. In this case, as shown in Fig. 2, the carbon fiber CF is configured between the short fibers A functioning as the current collector.

The carbon fiber CF is in contact with the short fiber A, the active substance powder 20, the conductive aid 30, and other carbon fibers CF. In this embodiment, the carbon fiber CF with an average thickness of 0.1 µm or more and less than 0.2 µm and an average length of 20 µm or more and less than 200 µm is used. In one example, the resistivity of the carbon-based conductive aid 30 is 0.1 to 0.3Ω•cm, and the resistivity of the carbon fiber CF is, for example, 5×10⁻⁵ Ω•cm.

For example, even in the case that the active substance powder 20 and the short fiber A are not in direct contact, the active substance powder 20 and the short fiber A are electrically connected through the carbon fiber CF. In addition, even in the case that the active substance powder 20 is in direct contact with the short fiber A, by providing a connection with the carbon fiber CF, the electrical resistance between the active substance powder 20 and the short fiber A may be further reduced.

In this way, through the carbon fiber CF having the good conductivity, the movement resistance of the electrons between the active substance powder 20 and the short fiber A may be reduced, and it is beneficial to reduce the movement resistance of the electrons to the input and output terminals.

It should be noted that, instead of using the conductive aid 30, the slurry S containing the carbon fiber CF may be used to manufacture the electrode. In this case, the carbon fiber CF is also configured between the short fibers A functioning as the current collector, and this structure is advantageous in reducing the electrical resistance between the active substance powder 20 and the short fiber A. It should be noted that Fig. 2 is a diagram for easy understanding of the structure of this embodiment. The size, thickness, length, and mixing ratio and the like of the short fiber A, the active substance powder 20, the conductive aid 30, the carbon fiber CF and the like are different from the reality.

### [Application to coin-type secondary battery]

Regarding the application of the coin-type secondary battery as the electricity storage device, for example, the structure described in Japanese Patent Application Laid-Open Publication No. 2018-106846 may be used below, to manufacture the coin-type battery by using the short fiber A of the present application to replace a blown fiber and a flutter-processed fiber in Japanese Patent Application Laid-Open Publication No. 2018-106846.

### [Application to laminated-type secondary battery]

In the case of laminating an electricity storage portion composed of the positive electrode, the negative electrode, and the diaphragm into a multilayer secondary battery, it is the same as the coin-type secondary battery, the electrode structure of the embodiment may be used for only the positive electrode, only the negative electrode and both the positive electrode and the negative electrode.

### [Application to all-solid-state battery]

The case of using in the all-solid-state battery is described below.

In the following, an all-solid-state lithium ion secondary battery is taken as an example to describe the electricity storage device (all-solid-state battery). It should be noted that this embodiment may be used for all-solid-state batteries such as an all-solid-state sodium ion secondary battery, an all-solid-state magnesium ion secondary battery, an air battery using the solid electrolyte, or the all-solid-state lithium ion secondary battery with intense expansion and contraction and using a Si (silicon) negative electrode.

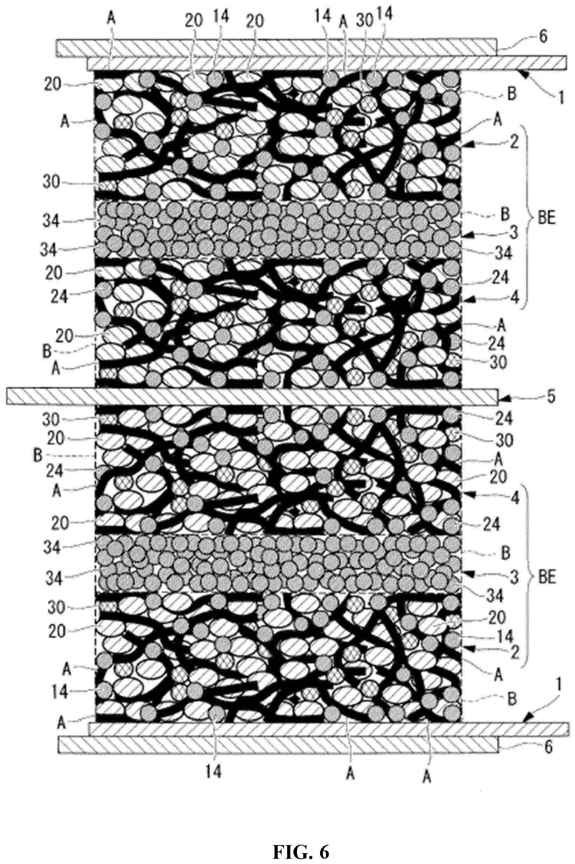

An example of a schematic diagram of the structure of the all-solid-state battery is shown in Fig. 6. The all-solid-state battery is roughly provided with a positive electrode current collector 1, a positive electrode layer 2, a solid electrolyte layer 3, a negative electrode layer 4, and a negative electrode current collector 5. The positive electrode layer 2 is the electrode of the above positive electrode, and the negative electrode layer 4 is the above negative electrode.

### (Current collector foil)

The positive electrode current collector 1 is generally a metal foil, and the metal foil may be formed by aluminum, an alloy composed of various metals and the like. The negative electrode current collector 5 generally uses a copper foil in many cases. While the active substance powder 20 of the negative electrode is composed of lithium titanate, the negative electrode current collector 5 may use the aluminum foil. In the case of the all-solid-state battery, stainless steel (SUS) with higher voltage resistance and corrosion resistance, a conductive material such as a cobalt-based alloy, other conductive materials, conductive ceramics and the like are also used sometimes.

### (Positive electrode layer)

In order to increase the discharge capacity, the material of the active substance powder 20 of the positive electrode is preferably a substance that easily inserts the lithium ion, such as LiCoPO, LiCoO₂, LiMnO₄, LiFePO₄ and the like. According to the needs, the conductive aid 30, the binder B, an inorganic solid electrolyte for improving the ion conductivity, and a powdered solid electrolyte 14 such as a polymer electrolyte are added, and the positive electrode layer is formed by sintering and press-forming. In this embodiment, the positive electrode layer contains the short fiber A made of aluminum, copper and the like.

### (Negative electrode layer)

The material of the active substance powder 20 of the negative electrode is also the same as that of the positive electrode layer. In order to increase the discharge capacity, it is preferably a material that easily inserts the ion. For example, LiFePO4, Li₄Ti₅O₁₂, Li₄Fe₄(PO₄)_{3,} SiOx, Cu₆Sn₅, LiTiO₄ and the like may be listed. The negative electrode layer is formed by mixing the active substance powder 20, the conductive aid 30, the binder B, the inorganic solid electrolyte for improving the ion conductivity, and the powdered solid electrolyte 24 such as the polymer electrolyte, and sintering and press-forming. In this embodiment, the negative electrode layer contains the short fiber A made of aluminum, copper and the like.

In the positive electrode and the negative electrode of the all-solid-state battery, the mixing ratio of the short fiber A is also 1% by weight or more and less than 8% by weight, preferably 3.5% by weight or more and 5% by weight or less. In addition, the mixing ratio of the binder B is preferably 2% by weight or more and less than 6% by weight.

### (Forming of positive electrode layer)

Firstly, the liquid-like or gel-like slurry S containing the short fiber A, the active substance powder 20 that generates the chemical reaction during charging-discharging, the conductive aid 30, the binder B, and the solid electrolyte 14 is prepared. The slurry S is prepared by mixing a mixture of the short fiber A of aluminum or copper, the active substance powder 20, the conductive aid 30, the diluted binder B, and the solid electrolyte 14. During the charging-discharging, the chemical reaction in which the ions such as the lithium ion are released from the active substance powder 20 of the positive electrode into the electrolyte, and the chemical reaction in which the ions such as the lithium ion enter the active substance powder 20 occur.

Next, in order to increase the viscosity of the slurry S, pre-drying is performed. The pre-drying is to dry the binder B to a state in which it is not completely solidified, so that the slurry S is easily formed into a predetermined shape. Therefore, the pre-drying may be omitted according to the viscosity of the binder B.

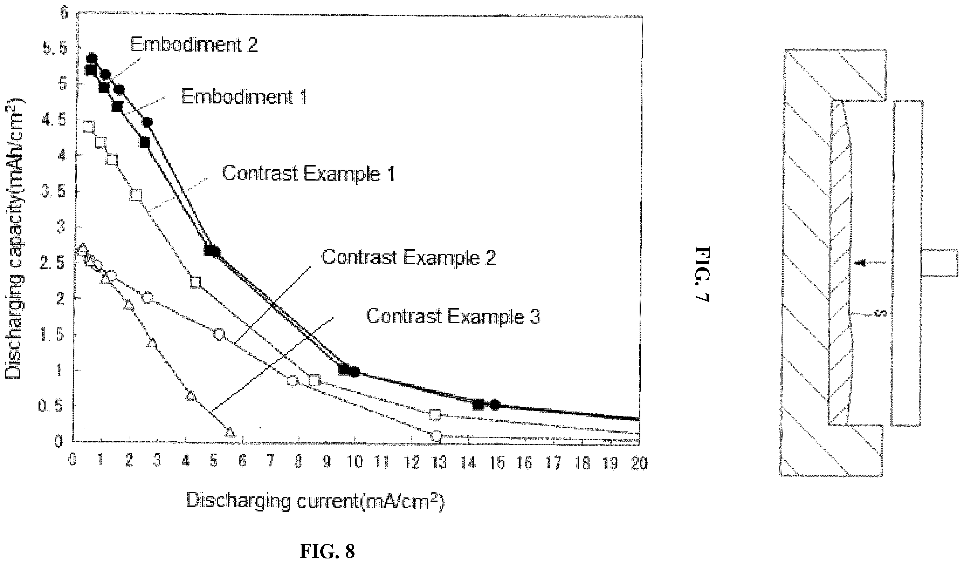

Next, as shown in Fig. 7, the slurry S is put into a mold, and the slurry S is pressurized. Thus, the slurry S is formed into a predetermined thickness and the like corresponding to the size of the electrode. It should be noted that the slurry S may be pressurized by enabling the slurry S to pass between a pair of rollers, thus the slurry S is formed into the predetermined thickness corresponding to the size of the electrode. Or, after the thickness of the slurry S may be adjusted with a mold or a roller, the slurry S may be cut and formed into a predetermined shape (size). Or, the slurry S may be formed into the predetermined shape by coating the slurry S on one surface in the thickness direction of the positive electrode current collector 1.

Next, the drying working procedure of drying the formed slurry S by vacuum drying and the like is performed. Thus, the binder B in the slurry S is solidified. Thus, the active substance powder 20 and the solid electrolyte 14 in the slurry S are in a state contacting with the short fiber A. It should be noted that the state of contacting does not mean that all the active substance powder 20 is in contact with the short fiber A, and even if a part of the active substance powder 20 is in contact with the short fiber A, it is the state of contacting. Similarly, even if a part of the solid electrolyte 14 is in contact with the short fiber A, it is also the state of contacting.

It should be noted that the mixing ratio of the substances in the positive electrode layer 2 in which the active substance powder 20 and the solid electrolyte 14 are added is preferably 80% by weight or more, more preferably 85% by weight or more, and further preferably 90% by weight or more. Herein, the mixing ratio of the active substance powder 20 is preferably 70% by weight or more, and more preferably 75% by weight or more. On the other hand, the mixing ratio of the solid electrolyte 14 is preferably 10% by weight or more, and more preferably 15% by weight or more. The mixing ratio of the short fiber A in the positive electrode layer 2 is preferably 3% by weight or more, more preferably about 5% by weight, and preferably less than 8% by weight. The rest is occupied by the conductive aid 30, the binder B, the carbon fiber CF and the like.

### (Forming of negative electrode layer)

Firstly, the liquid-like or gel-like slurry S containing the short fiber A, the active substance powder 20 that generates the chemical reaction during charging-discharging, the conductive aid 30, the binder B, and the solid electrolyte 24 is prepared. The slurry S is prepared by mixing a mixture of the short fiber A of aluminum or copper, the active substance powder 20, the conductive aid 30, the diluted binder B, and the solid electrolyte 24.

Next, in order to increase the viscosity of the slurry S, pre-drying is performed. The pre-drying is to dry the binder B to a state in which it is not completely solidified, so that the slurry S is easily formed into a predetermined shape. Therefore, the pre-drying may be omitted according to the viscosity of the binder B.

Next, as shown in Fig. 7, the slurry S is put into a mold, and the slurry S is pressurized. Thus, the slurry S is formed into a predetermined thickness and the like corresponding to the size of the electrode. It should be noted that the slurry S may be pressurized by enabling the slurry S to pass between a pair of rollers, thus the slurry S is formed into the predetermined thickness corresponding to the size of the electrode. Or, after the thickness of the slurry S may be adjusted with a mold or a roller, the slurry S may be cut and formed into a predetermined shape (size). Or, the slurry S may be formed into the predetermined shape by coating the slurry S on one surface in the thickness direction of the negative electrode current collector 5.

Next, the drying working procedure of drying the formed slurry S by vacuum drying and the like is performed. Thus, the binder B in the slurry S is solidified. Thus, the active substance powder 20 and the solid electrolyte 24 in the slurry S are in a state contacting with the short fiber A. It should be noted that the state of contacting does not mean that all the active substance powder 20 is in contact with the short fiber A, and even if a part of the active substance powder 20 is in contact with the short fiber A, it is the state of contacting. Similarly, even if a part of the solid electrolyte 24 is in contact with the short fiber A, it is also the state of contacting.

It should be noted that in the positive electrode and the negative electrode, adsorption substance powder that adsorbs electrolyte ions during charging may also be used as the active substance powder instead of the active substance powder 20.

It should be noted that the mixing ratio of the substances in the negative electrode layer 4 in which the active substance powder 20 and the solid electrolyte 24 are added is preferably 80% by weight or more, more preferably 85% by weight or more, and further preferably 90% by weight or more. Herein, the mixing ratio of the active substance powder 20 is preferably 70% by weight or more, and more preferably 75% by weight or more. On the other hand, the mixing ratio of the solid electrolyte 24 is preferably 10% by weight or more, and more preferably 15% by weight or more. The mixing ratio of the short fiber A in the negative electrode layer 4 is preferably 3% by weight or more, more preferably about 5% by weight, and preferably less than 8% by weight. The rest is occupied by the conductive aid 30, the binder B, the carbon fiber CF and the like.

### (Forming of solid electrolyte layer)

A mixture of the solid electrolyte 24 containing powder and the binder B is mixed to form the liquid-like or gel-like slurry, it is dried, pressurized in the mold, and pressurized with the roller and the like, to obtain the solid electrolyte layer 3 with the predetermined thickness. The solid electrolyte layer 3 may be a well-known solid electrolyte layer. In addition, the solid electrolyte layer 3 may be a well-known gel-like solid electrolyte layer.

### (Forming of electricity storage element)

By overlapping the positive electrode layer 2, the solid electrolyte layer 3, and the negative electrode layer 4 manufactured as described above and pressurizing, the positive electrode layer 2 and the solid electrolyte layer 3 are combined, and the solid electrolyte layer 3 and the negative electrode layer 4 are combined. In addition, according to the needs, the positive electrode current collector 1 is overlapped on the positive electrode layer 2, and the negative electrode current collector 5 is overlapped on the negative electrode layer 4. In this way, the electricity storage element BE composed of the positive electrode layer 2, the solid electrolyte layer 3, and the negative electrode layer 4 is formed. As shown in Fig. 6, by overlapping a necessary number of the electricity storage elements BE, the all-solid-state battery is formed.

### (Solid electrolyte)

The solid electrolytes 14, 24, and 34 exist in the entire battery like the electrolyte of the lithium ion battery (LiB), and the ion transfer is performed between the positive electrode layer 2 and the negative electrode layer 4. As materials of the solid electrolytes 14, 24, and 34, the following inorganic solid electrolyte and polymer solid electrolyte may be used.

As the inorganic solid electrolyte, Li (lithium) nitrides, halides, silicides and the like, for example, Li₃N, Lil, Li₃N-Lil-LiOH, LiSiO₄, LiSoO₄-LiI-LiOH, Li₃PO₄-Li₄SiO₄, Li₂SiS₃, may be used. In addition, a lithium-containing phosphate compound with a NASICON-type structure may be used, and a chemical formula thereof is LiₓM_{y} (PO₄)₃. x is 1≤x≤2, y is l≤y≤2, and M may be a substance made of Al, Ti, Ge, Ga and the like. In addition, P may also be replaced with Si and B.

As the polymer solid electrolyte, a polyethylene oxide derivative, a polypropylene oxide derivative, a phosphoric acid ester polymer and the like may be used.

### [Embodiment]

An example in which the above short fiber A is applied to the positive electrode of the lithium ion battery is shown below.

The short fiber A of aluminum, the active substance powder 20 (ternary system Li (NiₐMn_{b}Co_{1-a-b})O₂ (NMC)), the conductive aid 30 (acetylene black (AB)), the binder B (polyvinylidene fluoride (PVDF)) diluted with a solvent (N-methylpyrrolidone (NMP)) are used to prepare the slurry S in the weight ratio (the weight ratio after the drying working procedure), so that active substance powder 20: conductive aid 30: binder B: short fiber A of aluminum is 87:5:4:4. Then, this slurry S is used, a positive electrode foil prepared as described above and a negative electrode foil without adding metal fibers such as the short fiber A are used on the aluminum foil, and LiPF₆ (lithium hexafluorophosphate) is used in the electrolyte to manufacture a lithium ion battery (Embodiment 1 ). In addition, in the lithium ion battery of Embodiment 1, a lithium ion battery in which 1.5% by weight of carbon nanofibers CF are added to the above slurry S in the weight ratio while the positive electrode is manufactured is also manufactured (Embodiment 2). By adding 1.5% by weight of the carbon fiber CF, the weight ratio of active substance powder 20: conductive aid 30: binder B: short fiber A of aluminum is about 85.7:4.9:3.9:3.9.

In addition, in the lithium ion battery of Embodiment 1, a lithium ion battery in which the short fiber A of aluminum or copper is not added to the slurry S while the positive electrode is manufactured is also manufactured (Contrast Example 1). Without adding the short fiber A, the weight ratio of active substance powder 20: conductive aid 30: binder B is about 87.5:5.2:4.2.

In order to manufacture the negative electrode foils of Embodiment 1, Embodiment 2 and Contrast Example 1, firstly, the active substance powder 20 (natural spherical graphite), the conductive aid 30 (acetylene black (AB)), and the binder B (polyvinylidene fluoride (PVDF)) diluted with the solvent (N-methylpyrrolidone (NMP)) are used to prepare the slurry S in the weight ratio, so that the weight ratio of active substance powder 20, conductive aid 30, binder B is 90:5:5. Then, this slurry S is used to process on the copper foil in the above manner, and the negative electrode foil is manufactured.

In addition, a lithium ion battery using commercially available positive electrode foil and negative electrode foil is also manufactured (Contrast Example 2). This positive electrode foil and negative electrode foil are considered to be high-performance among the commercially available positive electrode foil and negative electrode foil. It should be noted that the material of the active substance powder of the positive electrode of Contrast Example 2 is the same as the material of the active substance powder 20 of Embodiment 1, Embodiment 2 and Contrast Example 1, and the material of the active substance powder of the negative electrode of Contrast Example 2 is the same as the material of the active substance powder 20 of Embodiment 1, Embodiment 2 and Contrast Example 1.

In order to manufacture the lithium ion batteries of Embodiment 1, Embodiment 2, Contrast Example 1, and Contrast Example 2, the positive electrode foil and the negative electrode foil are cut into predetermined sizes, and a diaphragm made of a polypropylene is sandwiched between the positive electrode foil and the negative electrode foil, and they are accommodated in a battery container formed by a laminated sheet made of a plastic material. The electrolyte is added in the battery container and the battery container is sealed, thus the lithium ion batteries of Embodiment 1, Embodiment 2, Contrast Example 1, and Contrast Example 2 are manufactured. It should be noted that the sizes of the positive electrode foil and the negative electrode foil, the size of the diaphragm, the thickness of the diaphragm, and the capacity of the battery container of Embodiment 1, Embodiment 2, Contrast Example 1, and Contrast Example 2 are substantially the same.

It should be noted that in Embodiment 1, Embodiment 2 and Contrast Example 1, the average thickness of the positive electrode (the average thickness of the positive electrode layer) after removing the thickness of the aluminum foil (current collector foil) is about 155 µm, and the thickness of the aluminum foil of the positive electrode of Embodiment 1, Embodiment 2 and Contrast Example 1 is about 15 µm. In Contrast Example 2, the average thickness of the positive electrode (the average thickness of the positive electrode layer) after removing the thickness of the aluminum foil (current collector foil) is about 90 µm, and the thickness of the aluminum foil of the positive electrode of Contrast Example 2 is about 15 µm. In Embodiment 1, Embodiment 2, Contrast Example 1, and Contrast Example 2, the average thickness of the negative electrode (the average thickness of the negative electrode layer) after removing the thickness of the copper foil (current collector foil) is about 85 µm, and the thickness of the copper foil of the negative electrode of Embodiment 1, Embodiment 2, Contrast Example 1, and Contrast Example 2 is about 15 µm.

In addition, a commercially available lithium ion battery of 5000 mAh is used as Contrast Example 3.

The lithium ion batteries of Embodiment 1, Embodiment 2, Contrast Example 1, Contrast Example 2, and Contrast Example 3 are subjected to a charging-discharge test.

Fig. 8 shows the discharging characteristics (rate characteristics) of Embodiment 1, Embodiment 2, Contrast Example 1, Contrast Example 2, and Contrast Example 3.

Since the electrode mixed with the short fiber A of aluminum has the low internal resistance, the thickness of the active material layer of the electrode may also be set to be 2 to 3 times of the usual thickness. The active material layer refers to a layer having the short fiber A, the active substance powder 20, the conductive aid 30 and the binder B, and is a layer that does not contain the current collector foil. As described above, the positive electrodes of Embodiment 1 and Embodiment 2 are manufactured for this time with a thickness of about 1.7 times greater than that of Contrast Example 2. As shown in Fig. 8, it may be seen that the discharging capacity (charging capacity) per unit area of Embodiment 1 is compared with the discharging capacity (charging capacity) per unit area of Contrast Example 2, although it also depends on a discharging current (charging current), while the discharge current (charging current) is 2 mA/cm², it reaches about 2 times, and while the discharging current (charging current) is 3 mA/cm², it reaches about 1.75 times.

As described above, the thickness of the positive electrode of Embodiment 1 and Embodiment 2 is about 1.7 times greater than that of the positive electrode of Contrast Example 2. Therefore, it may be seen that the battery characteristics of Embodiment 1 and Embodiment 2 shown in Fig. 8 are excellent. It should be noted that, as shown in Fig. 8, there is a tendency that the discharging capacity (charging capacity) is decreased while the discharging current (charging current) is increased. This is common as the characteristics of the secondary battery. Namely, during rapid discharging or charging, the discharging capacity or the charging capacity is decreased.

The positive electrode foil of the commercially available lithium ion battery of Contrast Example 3 forms the positive electrode containing the active substance on the aluminum foil of about 1800 cm². 5000 mAh divided by 1800 cm² is about 2.78 mAh/cm². As shown in Fig. 8, the rated capacity 5000 mAh of the commercially available lithium ion battery of Contrast Example is achieved while the discharging current (charging current) is 0.2 mA/cm². For example, while the charging-discharging of the commercially available lithium ion battery of Contrast Example 3 is performed at 2 mA/cm² (0.72 C), the charging-discharging is repeatedly performed at a maximum capacity of about 3470 mAh. On the other hand, in the lithium ion battery of Contrast Example 2 using the commercially available positive electrode foil and negative electrode foil at the same current, the capacity thereof is about 3870 mAh. In addition, in the lithium ion battery of Embodiment 1, the capacity thereof is about 7920 mAh, and the charging-discharging may be performed at a high capacity.

Through the comparison with Contrast Example 1, it may be seen that Embodiment 1 and Embodiment 2 are excellent. Namely, compared with the discharging capacity (charging capacity) per unit area of Contrast Example 1, the discharging capacity (charging capacity) per unit area of Embodiment 1 is 1.2-1.3 times while the discharging current (charging current) is 2 mA/cm², and it is also 1.2-1.3 times while the discharging current (charging current) is 3 mA/cm². It should be noted that, as described above, the thicknesses of the positive electrodes of Embodiment 1, Embodiment 2 and Contrast Example 1 are the same.

If the electrode of this embodiment is used, the thickness size of one electrode may be increased. With this structure, it is possible to increase the discharging capacity (charging capacity) while the weight of the entire battery is reduced and the volume is reduced and the like.

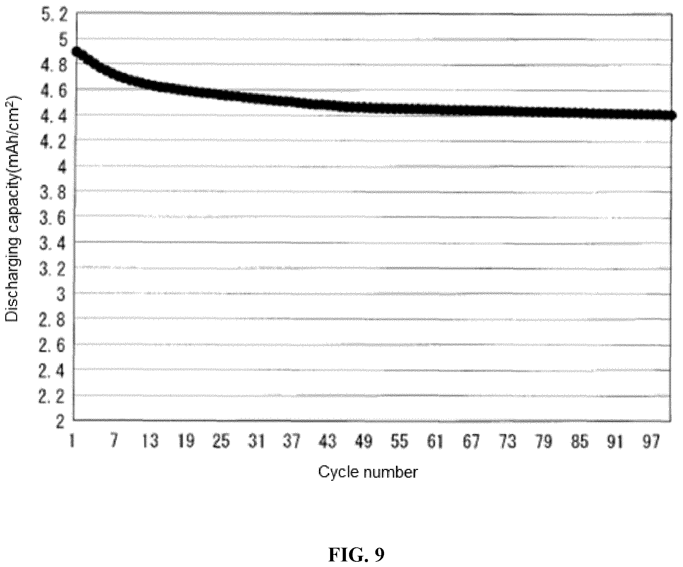

Fig. 9 shows the cycle characteristics of the lithium ion battery of Embodiment 1 measured by setting the current during charging-discharging to 2 mAh/cm². It may be seen that the discharging capacity (charging capacity) of the lithium ion battery of Embodiment 1 with the aluminum fiber added is decreased in an initial stage, but becomes stable at about 4.3 mAh/cm².

In this way, the lithium ion battery manufactured by using the short fiber A of aluminum or copper in this embodiment may have about two times of the discharging capacity (charging capacity) compared to the lithium ion battery using the commercially available electrode foil. As in Contrast Example 1, only by increasing the thickness size of the positive electrode or the negative electrode, the characteristic improvement proportional to the increase in thickness may not be achieved. However, the positive electrode or the negative electrode of this embodiment using the short fiber A of aluminum or copper may obtain the characteristics that are proportional to the increase in thickness or higher. The thickness of the positive electrode of Contrast Example 2 as the common electrode is 90 µm, but in Embodiments 1 and 2, the thickness of the positive electrode after removing the thickness of the aluminum foil is 155 µm, and Embodiments 1 and 2 are 1.7 times or more of Contrast Example 2. Namely, by adding the short fiber A to the electrode as described above, the thickness of the electrode may be 120 µm or more, more preferably 150 µm or more, and at the same time, the characteristics proportional to the increase in thickness or the above characteristics may be obtained.

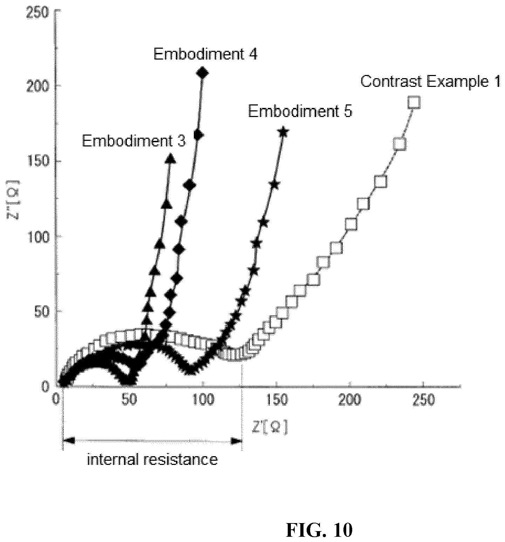

As shown in Fig. 10, the internal resistance of the battery with the electrode containing the short fiber A of aluminum or copper is lower than the internal resistance of the battery with the electrode without containing the short fiber A. It may be considered that the internal resistance of the battery with the electrode containing the short fiber A in this way is reduced, and the characteristics of Embodiment 1 and Embodiment 2 may be improved. Fig. 10 shows the internal resistance of the battery with the positive electrode of Embodiment 3, Embodiment 4, and Embodiment 5 and the internal resistance of the battery with the positive electrode of Contrast Example 1.

In Embodiment 3, relative to Embodiment 1, the weight ratio of the short fiber A of aluminum in the positive electrode is set to 1.22% by weight, and in Embodiment 4, relative to Embodiment 1, the weight ratio of the short fiber A of the aluminum foil in the positive electrode is set to 4.88% by weight. In addition, in Embodiment 5, relative to Embodiment 1, the weight ratio of the short fiber A of the aluminum foil in the positive electrode is set to 9.75% by weight. The weight ratio of the active substance powder 20, the conductive aid 30, and the binder B of Embodiment 3, Embodiment 4, and Embodiment 5 is slightly changed relative to the weight ratio of Embodiment 1 according to the increase or decrease of the short fiber A.

As shown in Fig. 8 and Fig. 10, if the electrode containing the short fiber A is used like this embodiment, as long as it has the same discharging capacity (charging capacity), the charging-discharging may be performed at twice the speed. In addition, the discharging capacity (charging capacity) of Embodiment 2 to which the carbon fiber CF is added is increased compared to Embodiment 1.

In this way, the electrode of this embodiment may obtain the characteristics proportional to the increase in thickness or the above characteristics. For example, while the battery is manufactured by stacking a plurality of the positive electrode foils and a plurality of the negative electrode foils, and the aluminum foil and the copper foil and the like are used as the current collector on each positive electrode foil and each negative electrode foil, the piece number of the aluminum foils and the copper foils required for manufacturing the batteries with the same capacity is reduced. This is helpful to the space saving of the battery, the light weight of the battery, and the reduction of the manufacturing cost of the battery and the like.

It should be noted that the short fiber A may also be manufactured by a method other than the coil cutting method. For example, the short fiber A may be formed by a flutter cutting method in which a cutting tool is brought into contact with a cylindrical component of aluminum or copper having a circular cross section, a milling method and the like.

In addition, it is also possible to manufacture the short fiber A with the above length by blowing a metal such as molten aluminum into a space from a micropore.

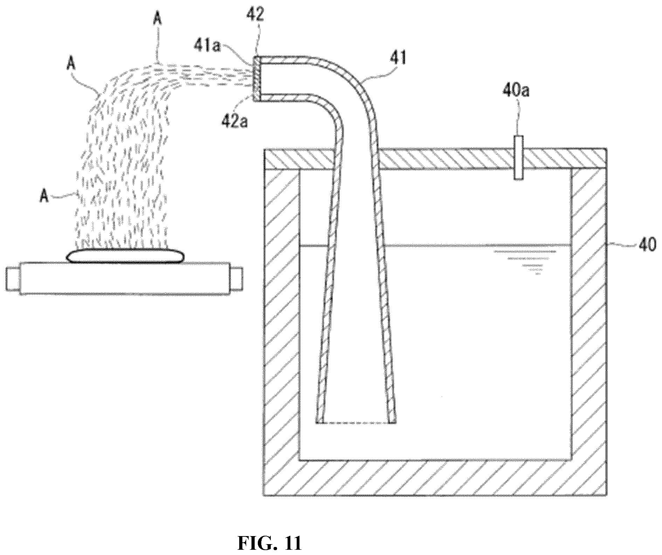

For example, as shown in Fig. 11, the molten aluminum is prepared in a closed container 40 into which a base end portion of an elbow pipe 41 made of ceramics, stainless steel and the like and bent at a front end is inserted, under a state that a front end portion of the elbow pipe 41 is exposed outside the closed container 40, while air or inert gas and the like is injected from a gas guiding pipe 40a to increase the pressure in the closed container 40, the molten aluminum rises from a rear portion of the elbow pipe 41 and reaches the front end portion.

If a nozzle 42 having a plurality of micropores 42a with a pore diameter of several µm to several mm is arranged in an opening portion 41a at the front end of the elbow pipe 41, the molten aluminum is blown into the space from the micropores 42a. As the aluminum, it is preferable to use the aluminum with a purity of 99.9% or higher in terms of easy processing, and it is more preferable to use the aluminum with a purity of 99.99% or higher. However, an alloy with other metals may also be used. The space may be filled with the air, or other inert gases such as nitrogen. It should be noted that the front end of the elbow pipe 41 may also face downward.

In an example of Fig. 11, the nozzle 42 is arranged in a mode of blowing the aluminum in an approximately horizontal direction, but the aluminum may be blown in other directions such as a direction facing downward. Thus, the aluminum coming out of the micropores 42a of the nozzle 42 is cooled while being scattered in the space, and becomes the short fibers A of aluminum.

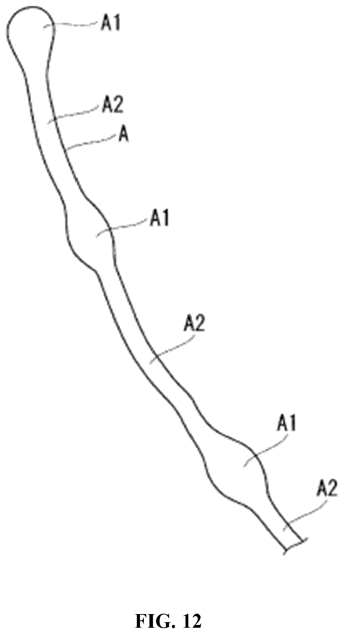

It should be noted that while the short fibers A obtained by blowing the molten aluminum and other metals into the space from the micropores are used to manufacture the respective electrodes, the effects described later may be obtained. Firstly, the short fiber A has a shape having a large diameter portion A1 and a small diameter portion A2 as shown in Fig. 12 according to the blowing conditions. In one example, as shown in Fig. 12, the large diameter portion A1 is shorter than the small diameter portion A2, and the large diameter portion A1 has 1.5 times or more of a diameter relative to the small diameter portion A2. Namely, the large diameter portion A1 is a portion having a diameter that is 1.5 times or more greater than that of the small diameter portion A2. In one example, the length of the large diameter portion A1 is 5 times shorter than the average diameter of the small diameter portion A2, and more preferably shorter than 3 times. In Fig. 12, a plurality of the large diameter portions A1 and a plurality of the small diameter portions A2 alternately exist on one piece of the short fiber A, but there is also a case that a single large diameter portion A1 and a single small diameter portion A2 exist on one piece of the short fiber A. In one example, the average diameter of the small diameter portion A2 is 10 µm or more and 30 µm or less. It should be noted that other metals may also be used to manufacture the short fiber A having the large diameter portion A1 and the small diameter portion A2.

If the short fiber A described above is used to manufacture the electrode of each of the above embodiments, the large diameter portion A1 of the short fiber A is easily exposed on the surface of the electrode. This is beneficial to reduce the electrical resistance between the short fiber A in the electrode foil and the current collector foil. In addition, while the electrode is manufactured without using the current collector foil, the large diameter portion A1 of the short fiber A is also easily exposed on the surface of the electrode foil. Therefore, while a terminal and the like are mounted on the electrode foil, the resistance between the terminal and the electrode foil is decreased.

The present invention is supplemented below.

### (Mode of Lithium ion battery)

The manufacturing method for the electrode of the electricity storage device in the first aspect of the present invention includes: the working procedure of using the mixing machine to mix the short fiber A of the above metals (mainly aluminum or copper), the active substance powder 20, the conductive aid 30, and the binder B to prepare the slurry S; the forming working procedure of coating and forming the slurry S on a predetermined metal foil (current collector foil); and the drying working procedure of drying the slurry S formed into the predetermined shape, to from the electrode containing the short fiber A of aluminum or copper that functions as the current collector and a structural body. The description of functioning as the structural body refers to a state in which the short fiber A maintains particles such as the active substance powder 20 and the conductive aid 30 maintained on the electrode foil. In the electrode foil without containing the short fiber A, while the electrode foil is bent, the particles tend to peel off from the electrode foil. In contrast, the short fiber A is also bent flexibly while the electrode foil containing the short fiber A is bent, and the short fiber A prevents the particles from falling off.

In the above embodiment, if the slurry formed into the predetermined shape is dried and pressed with a calendaring machine, the short fibers A of aluminum or copper are connected to each other, or the short fibers A are wound around the active substance powder 20 and the conductive aid 30.

Thus, the internal resistance of the active material layer may be greatly improved, and the structure that may be two times, three times and the like thicker than the commercially available electrode is formed.

### (Modes of Electric double-layer capacitor and solid-type battery)

The modes of these devices are also the same. In the case of the electric double-layer capacitor, the slurry S that mixes the adsorbent powder (activated carbon), the conductive aid 30, and the binder B with the above short fiber A is used, and in the case of the all-solid-state battery, the solid electrolyte is used instead of the liquid electrolyte.

### Description of reference signs

1-Positive electrode current collector, 2-Positive electrode layer, 3-Solid electrolyte layer, 4-Negative electrode layer, 5-Negative electrode current collector, 14, 24, 34-Solid electrolyte, 20-Active substance powder, 30-Conductive aid, A-Short fiber, A1-Large diameter portion, A2-Small diameter portion, B-Binder, S-Slurry, and CF-Carbon fiber.

## Claims

1. A manufacturing method for an electrode of an electricity storage device, comprising:
a fiber manufacturing working procedure, acquiring a long metal fiber by cutting an end surface of a coil with a cutting tool, wherein the coil is formed by winding a metal foil;
a cutting working procedure, cutting the long metal fiber so that the average length is less than 5 mm in a state of pressing a bundle of the long metal fibers on a predetermined surface by using a pressing component, or in a state of configuring the bundle of the long metal fibers in a plastic tube;
a slurry preparation working procedure, preparing liquid-like or gel-like slurry, wherein the slurry contains a binder, a metal short fiber manufactured by the cutting working procedure, and
adsorbent powder that adsorbs electrolyte ions during charging or active substance powder that performs a chemical reaction during charging-discharging;
a forming working procedure, forming the slurry into a predetermined shape; and
a drying working procedure, drying the slurry formed into the predetermined shape, to form an electrode containing the short fibers.

2. The manufacturing method for the electrode of the electricity storage device according to claim 1, wherein:
in the cutting working procedure, cutting the bundle of the long metal fibers together with the pressing component or the plastic tube.

3. The manufacturing method for the electrode of the electricity storage device according to claim 1 or 2, wherein:
the pressing component is a plastic film with a thickness of 1 mm or less.

4. The manufacturing method for the electrode of the electricity storage device according to any one of claims 1 to 3, wherein:
in the slurry preparation working procedure, mixing the short fibers into the slurry, so that the weight ratio of the short fibers relative to the entire electrode after drying in the drying working procedure is less than 8% by weight.

5. An electrode of an electricity storage device, comprising:
a metal short fiber of which an average length is less than 5 mm, and adsorbent powder that adsorbs electrolyte ions during charging or active substance powder that performs a chemical reaction during charging-discharging, wherein
the weight ratio of the short fibers is less than 8% by weight.

6. The electrode of the electricity storage device according to claim 5, wherein:
the electrode of the electricity storage device further comprises a carbon fiber of which an average thickness is 0.5 µm or less.

7. The electrode of the electricity storage device according to claim 5 or 6, wherein:
an average thickness of the electrode after removing a current collector foil is 120 µm or more.

8. An electrode of an electricity storage device, comprising:
a metal short fiber, and adsorbent powder that adsorbs electrolyte ions during charging or active substance powder that performs a chemical reaction during charging-discharging, wherein
the short fiber has a small diameter portion and a large diameter portion of which a diameter is more than 1.5 times greater than that of the small diameter portion, and
a length of the large diameter portion is 5 times less than an average diameter of the small diameter portion.

9. The electrode of the electricity storage device according to claim 8, wherein:
the average diameter of the small diameter portion of the short fiber is 30 µm or less.

10. The electrode of the electricity storage device according to claim 8 or 9, wherein:
the short fibers are composed of aluminum with a purity of 99.9% or more.

11. The electrode of the electricity storage device according to any one of claims 8 to 10, wherein:
a plurality of the large diameter portions and a plurality of the small diameter portions alternately exist on one piece of the short fiber A.
